# EUROPÄISCHE PATENTSCHRIFT

(11) **EP 3 527 507 B1**
(45) Veröffentlichungstag und Bekanntmachung des Hinweises auf die Patenterteilung: **07.06.2023**
(21) Anmeldenummer: 19168256.6
(22) Anmeldetag: 24.01.2017
(51) Int. Cl.: B65G 1/04, B65G 1/137

(54) **KOMMISSIONIEREINRICHTUNG UND KOMMISSIONIERWAGEN FÜR EIN WABENLAGER**
PICKING DEVICE AND PICKING CART FOR A HONEYCOMB STORAGE SYSTEM
DISPOSITIF DE PRÉPARATION DE COMMANDES ET CHARIOT DE PRÉPARATION DE COMMANDES POUR UN ENTREPÔT À RAYONNAGES

(30) Priorität: 29.01.2016 DE 102016101674
(43) Veröffentlichungstag der Anmeldung: 21.08.2019
(62) Teilanmeldung aus: 17152844.1
(73) Patentinhaber: KEURO Besitz GmbH & Co. EDV-Dienstleistungs KG, 77855 Achern (DE)
(72) Erfinder: Stolzer, Armin, 76530 Baden-Baden (DE)
(74) Vertreter: LBP Lemcke, Brommer & Partner Patentanwälte mbB

(56) Entgegenhaltungen:
- EP-A1- 0 213 289
- WO-A1-99/03760
- CH-A5- 667 865
- DE-A1- 19 650 538
- DE-U1-202005 013 790
- JP-A- S 617 141

## Beschreibung

Die vorliegende Erfindung betrifft eine Kommissioniereinrichtung nach dem Oberbegriff des Patentanspruchs 1 für ein Wabenlager mit mindestens einem Regal, das eine Mehrzahl von nebeneinander und übereinander angeordneten Lagerplätzen zur Aufnahme von Kassetten aufweist, welche bevorzugt zum Lagern von Langgut eingesetzt werden. Die Lagerplätze sind von einer Bedienseite des Regals zugänglich, an der ein Regalbediengerät vorgesehen ist. Die Lagerplätze sind hierbei solcherart ausgestaltet, dass die Kassetten in Längsrichtung horizontal aus den Lagerplätzen entnehmbar und in diese einbringbar sind.

Wabenlager dieser Art dienen zur Lagerhaltung von in der Regel langgestreckten Werkstücken, häufig als Langgut bezeichnet, wie beispielsweise Profilen, Stangen und Schienen, die oft mehrere Meter lang sind und aufgrund ungenügender Eigenstabilität oder zum Schutz der Oberflächen in Kassetten in das Wabenlager eingebracht werden. Die Ausrichtung der Lagerplätze in einem Wabenlager ermöglicht, eine Vielzahl von Lagerplätzen in einem Regal unterzubringen und darauf zugreifen zu können, denn die Stirnflächen der Werkstücke und somit auch der Kassetten, in denen die Werkstücke aufbewahrt werden, sind im Vergleich zu ihrer Längsausdehnung normalerweise klein. Gleichzeitig können die Kassetten ohne weiteres längs aus dem Regal herausgezogen und in dieses eingeschoben werden. Die Anzahl der von einer Seite des Regals zugänglichen Lagerplätze wird durch diese Anordnung also optimiert.

Langgut, das in einem solchen Wabenlager vorgehalten wird, wird in der Regel in Bündeln gleichartiger Werkstücke kassettenweise eingelagert, jedoch nicht wieder kassettenweise entnommen, sondern es muss normalerweise je nach Auftrag aus unterschiedlichen (Langgut)kassetten kommissioniert werden. Ein entsprechender Auftrag kann hierbei beispielsweise von einem Kunden eines Stahlhändlers stammen, der die Ware in einem Wabenlager vorhält, oder auch von der Produktion eines produzierenden Betriebs, der Halbzeug in einem eigenen Wabenlager bereithält. Mitunter müssen für ein Produkt, beispielsweise für ein Fenster, Werkstücke aus typischerweise zehn verschiedenen Langgutkassetten, beispielsweise zehn unterschiedliche Profile, entnommen und zu einem Auftrag zusammengestellt bzw. kommissioniert werden.

Hierzu weist ein Wabenlager der vorliegenden Art an einer Frontseite des mindestens einen Regals, die dessen Bedienseite gegenüberliegt, eine Kommissioniereinrichtung auf, mit der die einzelnen Kommissionen zusammengestellt und zum Abtransport bereitgestellt werden. Diese Kommissioniereinrichtung ist einer Anzahl von bodennahen Lagerplätzen im Regal zugeordnet, wobei diese Lagerplätze als Bereitstellungslagerplätze ausgestaltet sind. Dies bedeutet, dass darin befindliche Kassetten auch an der Frontseite des Regals entnommen werden können. Typischerweise gibt es in einem herkömmlichen Wabenlager nur wenige Bereitstellungslagerplätze, und die Kommission muss manuell abgeführt werden.

Um eine Kommission zusammenzustellen, werden von einem übergeordneten Lagerverwaltungssystem oder einer Bedienperson, dem Kommissionierer, die aus dem Wabenlager zu entnehmenden Werkstücke angefordert, so dass das Regalbediengerät die Kassetten, in denen sich die angeforderten Werkstücke befinden, sukzessive aus ihren Lagerplätzen holt und im Bereitstellungslagerplatz bzw., wenn mehrere solche Plätze vorhanden sind, in den Bereitstellungslagerplätzen absetzt. Von dort können sie dann an der Frontseite des Regals in die Kommissioniereinrichtung gezogen werden. Dort wird die benötigte Anzahl an darin befindlichen Werkstücken entnommen und in andere Kassetten oder auf Bodenlager kommissioniert.

Aus der EP-A-0 213 289 ist ist eine Kommissioniereinrichtung nach dem Oberbegriff des Anspruchs 1 bekannt. Insbesondere, offenbart das Dokument eine Vorrichtung zum Ein- und Auslagern von Gütern in oder aus einem Wabenregal bekannt, mit einem Transportwagen, der eine Anzahl von übereinander angeordneten Reihen von Lagerungselementen aufweist, sodass mehrere Kassetten oder gebündeltes Material auf dem Transportwagen abgelagert werden können. Dieser Transportwagen kann zum Kommissionieren verwendet werden, indem die für eine Kommission vorgesehenen Materialbündel oder Kassetten während des Entnahmevorgangs aus dem Wabenregal auf dem Transportwagen zwischengelagert und zu einem späteren Zeitpunkt an einen Kommissionierplatz gefahren werden.

Eine herkömmliche Kommissioniereinrichtung besteht üblicherweise aus mehreren Kommissionierplätzen, auf denen Kassetten oder sonstige Transporteinrichtungen für die Werkstücke, insbesondere Langgut angeordnet sind. Unterstützt von Hubwagen und Kränen, ziehen Bediener die in den Bereitstellungslagerplätzen bereitgestellten Kassetten aus dem Regal und entnehmen die für eine Kommission benötigte Anzahl von Werkstücken, um sie auf dem entsprechenden Kommissionierlagerplatz abzulegen. Danach schieben die Bediener die Kassette mit den nicht benötigten Werkstücken wieder zurück auf den Bereitstellungslagerplatz, von wo sie das Regalbediengerät wieder an den eigentlichen Lagerplatz zurücklagert.

Insbesondere der Arbeitsschritt des Entnehmens von benötigten Werkstücken aus der Kassette bis zum Ablegen auf den entsprechenden Kommissionierplatz ist nach dieser herkömmlichen Vorgehensweise recht zeitintensiv, wobei teilweise längere Strecken zurückzulegen sind, wenn mehrere Kommissionierplätze nebeneinander bedient werden.

Der vorliegenden Erfindung liegt daher die Aufgabe zugrunde, eine Kommissioniereinrichtung für ein Wabenlager der vorliegenden Art zu verbessern, um die Arbeitsabläufe beim Kommissionieren zu optimieren.

Gelöst ist diese Aufgabe durch eine Kommissioniereinrichtung mit den Merkmalen des Anspruchs 1. Vorteilhafte Ausgestaltungen und Weiterbildungen der Erfindung finden sich in den Ansprüchen 2 bis 5.

Die erfindungsgemäße Kommissioniereinrichtung enthält demnach mehrere Kommissionierplätze, die zum Abstellen von Kassetten dienen, sowie einen Kommissionierwagen, der entlang der Frontseite des Regals, in Querrichtung der Kassetten verfahrbar ist. Der Kommissionierwagen ist hierbei so ausgebildet, dass er im Wesentlichen alle Kommissionierplätze anfahren kann.

Die Kommissioniereinrichtung umfasst erfindungsgemäß außerdem eine Entnahmevorrichtung zum Herausziehen und Einschieben von Kassetten aus dem und in die Bereitstellungslagerplätze, wobei diese Entnahmevorrichtung ebenfalls entlang der Frontseite des Regals, in Querrichtung der Kassetten verfahrbar ist.

Im Rahmen der vorliegenden Erfindung ist die Entnahmevorrichtung vom Kommissionierwagen unabhängig, so dass der Kommissionierwagen und die Entnahmevorrichtung separat verfahrbar sind und separat im Wesentlichen alle Kommissionierplätze anfahren können.

Die Entnahmevorrichtung ermöglicht, eine ganze Reihe von vorzugsweise bodennahen Lagerplätzen als Bereitstellungslagerplätze zu qualifizieren, aus denen Kassetten zum Kommissionieren entnommen werden können. Dies ermöglicht eine parallele Kommissionierung, während herkömmlicherweise eine einzige oder höchstens zwei feststehende Bahnen an der Frontseite des Regals angeordnet sind, mit denen Kassetten aus einem oder gegebenenfalls zwei Bereitstellungslagerplätzen zum Kommissionieren aus dem Regal herausgefahren und wieder in dieses zurückgelagert werden können, soweit nicht die Kassetten ohnehin von Hand aus dem Regal gezogen werden.

Der Kommissionierwagen ermöglicht, aus einer Kassette entnommene Werkstücke im Kommissionierwagen zwischenzulagern und mit diesem zum entsprechenden Kommissionierplatz zu fahren, wo sie dann in eine dort abgestellte Kommissionierkassette oder ein Bodenlager abgelegt werden. Dies beschleunigt den entsprechenden Arbeitsvorgang nicht nur durch den Entfall von Laufwegen für die Bedienperson, sondern auch durch die Möglichkeit, mit mehreren Kommissionierplätzen sowie, im Zusammenspiel mit der Entnahmevorrichtung, auch mit mehreren Bereitstellungslagerplätzen parallel zu arbeiten. Die vorliegende Erfindung beschleunigt und flexibilisiert damit die Kommissionierung aus einem Wabenlager signifikant.

Eine weiter verbesserte Beschleunigung und Flexibilität beim Kommissionieren wird mit einer erfindungsgemäß bevorzugten Entnahmevorrichtung erzielt, die mindestens zwei Arbeitsebenen aufweist, um wahlweise mit zwei oder mehr übereinander angeordneten Bereitstellungslagerplätzen des Regals zusammenzuarbeiten. Eine solche Entnahmevorrichtung ist außerdem mit einer Heb- und Senkeinrichtung zum Bewegen von Kassetten zwischen den Arbeitsebenen versehen, so dass die Entnahmevorrichtung alle Kommissionierplätze anfahren kann. Gleichzeitig sind gegenüber der herkömmlichen Kommissionierung noch mehr Bereitstellungslagerplätze möglich, die zum Kommissionieren zur Verfügung stehen.

Die Entnahmevorrichtung ist mit einer Längstraverse ausgestattet, die der Länge einer Kassette angepasst ist, so dass sie diese längs überspannt. Außerdem ist eine motorisch betriebene Manipuliervorrichtung zum Ziehen und Schieben einer Kassette entlang der Längstraverse vorhanden.

Da es erfindungsgemäß möglich ist, eine vergleichsweise große Anzahl von Bereitstellungslagerplätzen einzurichten, können Teilaufträge oder fertig kommissionierte Aufträge, die in einer Kassette zusammengestellt sind, in den Bereitstellungslagerplätzen zwischengelagert werden, so dass die entsprechenden Kommissionierplätze frei werden. Dies erhöht die Flexibilität beim Kommissionieren weiter. Beispielsweise könnte auch eine fertig kommissionierte Kassette vom Regalbediengerät aus dem Bereitstellungslagerplatz entnommen und an einen Lagerort im Wabenlager gebracht werden, um mit einer solchen Zwischenlagerung Randzeiten und Zeiten mit geringem Auftragseingang zum Kommissionieren weniger eiliger Aufträge zu nutzen.

Die Längstraverse der Entnahmevorrichtung ist an ihren stirnseitigen Endbereichen mit jeweils einem mechanisch oder elektronisch geführten, insbesondere schienengebundenen Wagen verbunden, wobei die Wagen zusammen mit der Längstraverse einen lichten Raum unterhalb der Längstraverse bilden, der den Abmessungen einer Kassette angepasst ist, so dass die Entnahmevorrichtung Kassetten, die auf Kommissionierplätzen abgestellt sind, ungehindert überfahren kann. Zumindest der Wagen, der zur Frontseite des Regals hin angeordnet ist, sollte dann eine Öffnung oder eine Aussparung zum Durchziehen oder Durchschieben einer Kassette aufweisen, so dass die motorisch betriebene Manipuliervorrichtung an der Längstraverse die Kassetten ungehindert aus den Bereitstellungslagerplätzen entnehmen bzw. diese wieder dorthin einschieben kann. Soweit die Entnahmevorrichtung mit mehreren Arbeitsebenen ausgestattet ist, kann die Öffnung oder Aussparung im Wagen das Hindurchziehen oder Hindurchschieben einer Kassette in jeder Arbeitsebene ermöglichen.

Der Kommissionierwagen der erfindungsgemäßen Kommissioniereinrichtung weist mindestens eine Zwischenablagestruktur zur Zwischenlagerung von Langgut auf. Die Zwischenablagestruktur besitzt eine Länge, die der Länge einer Kassette angepasst ist, um diese längs zu überspannen. Sie kann im Wesentlichen aus einer Traverse mit daran angeordneten Querstreben bestehen, so dass Langgut, das in einer Kassette gelagert ist, aus dieser entnommen und ganz einfach bis zur Traverse angehoben werden kann, um es schließlich auf den Querstreben der Traverse abzulegen. Nachdem der Kommissionierwagen dann an den entsprechenden Kommissionierplatz gefahren wurde, kann das Langgut von der Zwischenablagestruktur in die dortige Kassette gelegt werden.

Stirnseitig ist die Zwischenablagestruktur des Kommissionierwagens mit einem mechanisch oder elektronisch geführten, insbesondere schienengeführten Wagenelement verbunden. Die Wagenelemente bilden zusammen mit der Zwischenablagestruktur einen lichten Raum unterhalb derselben, der den Abmessungen einer Kassette angepasst ist, so dass der Kommissionierwagen die Kassetten ungehindert überfahren kann, die auf Kommissionierplätzen abgestellt sind. So ist es möglich, dass der Kommissionierwagen unabhängig davon, ob die Kommissionierplätze leer oder belegt sind, jeden Kommissionierplatz anfahren kann.

Der Kommissionierwagen kann mit mindestens einem Manipulator, beispielsweise einem Roboter, für die Werkstücke ausgestattet sein. Damit kann die Kommissionierung dann vollständig ohne menschliche Arbeitskraft erfolgen.

Die insbesondere als Schienen ausgebildeten Führungen für die geführten Wagenelemente des Kommissionierwagens sowie gegebenenfalls auch für die geführten Wagen der Entnahmevorrichtung verlaufen zweckmäßigerweise in einem geringen Abstand vor den Stirnseiten der Kommissionierplätze bzw. der darauf abgestellten Kassetten in Querrichtung derselben, also parallel zur Frontseite des Regals.

Besonders bevorzugt weist der Kommissionierwagen des erfindungsgemäßen Wabenlagers auf mindestens einem seiner Wagenelemente eine Bedienerplattform auf; besonders bevorzugt sind beide Wagenelemente mit jeweils einer Bedienerplattform versehen. Auf diesen Bedienerplattformen können sich jeweils ein oder mehrere Bedienpersonen aufhalten um Langgut aus Kassetten zu entnehmen und auf der Zwischenablagestruktur des Kommissionierwagens zwischenzulagern. Hierbei wird das Langgut stirnseitig von den vorzugsweise zwei Bedienpersonen gegriffen und angehoben. Am Kommissionierplatz wird das Langgut dann umgekehrt von der Zwischenablagestruktur des Kommissionierwagens genommen und in die auf dem Kommissionierplatz abgestellte Kassette eingelegt. Vorzugsweise kann von einer Bedienerplattform aus die Bewegung des Kommissionierwagens sowie gegebenenfalls auch die Bewegung der Entnahmevorrichtung gesteuert werden.

Die Kommissionierplätze des erfindungsgemäßen Wabenlagers weisen bevorzugt Tragstrukturen für Kassetten auf, deren Niveau dem Niveau der untersten Bereitstellungslagerplätze im Regal im Wesentlichen entspricht. Die Kassetten können dann ganz einfach aus den Bereitstellungslagerplätzen heraus und auf die Tragstruktur der Kommissionsplätze gezogen werden sowie umgekehrt von den Kommissionierplätzen wieder in die Bereitstellungslagerplätze eingeschoben werden.

Anhand der beigefügten Zeichnungen werden im Folgenden vier Ausführungsbeispiele für ein Wabenlager mit Kommissioniereinrichtung mit Kommissionierwagen beschrieben und erläutert. Es zeigen:
- Figur 1: eine schematische isometrische Ansicht eines Wabenlagers in einem ersten Ausführungsbeispiel, das nicht gemäß der Erfindung ist,

- Figur 2: ein Detail aus Figur 1, umfassend die Kommissioniereinrichtung des Wabenlagers;
- Figur 3: eine Frontansicht der Kommissioniereinrichtung aus Figur 2;
- Figur 4: eine Seitenansicht der Kommissioniereinrichtung aus Figur 2;
- Figur 5: eine isometrische Darstellung einer Kommissioniereinrichtung gemäß einem zweiten Ausführungsbeispiel;
- Figur 6: eine Frontansicht der Kommissioniereinrichtung aus Figur 5;
- Figur 7: eine Seitenansicht der Kommissioniereinrichtung aus Figur 5;
- Figur 8: eine isometrische Darstellung einer Kommissioniereinrichtung gemäß einem dritten Ausführungsbeispiel;
- Figur 9: eine Frontansicht der Kommissioniereinrichtung aus Figur 8;
- Figur 10: eine Seitenansicht der Kommissioniereinrichtung aus Figur 8;
- Figur 11: eine vereinfachte, schematische isometrische Darstellung einer Kommissioniereinrichtung nach dem zweiten Ausführungsbeispiel;
- Figur 12: eine vereinfachte, schematische isometrische Darstellung einer Kommissioniereinrichtung nach dem dritten Ausführungsbeispiel;
- Figur 13: eine vereinfachte, schematische isometrische Darstellung einer Kommissioniereinrichtung nach einem vierten Ausführungsbeispiel, das nicht gemäß der Erfindung ist.

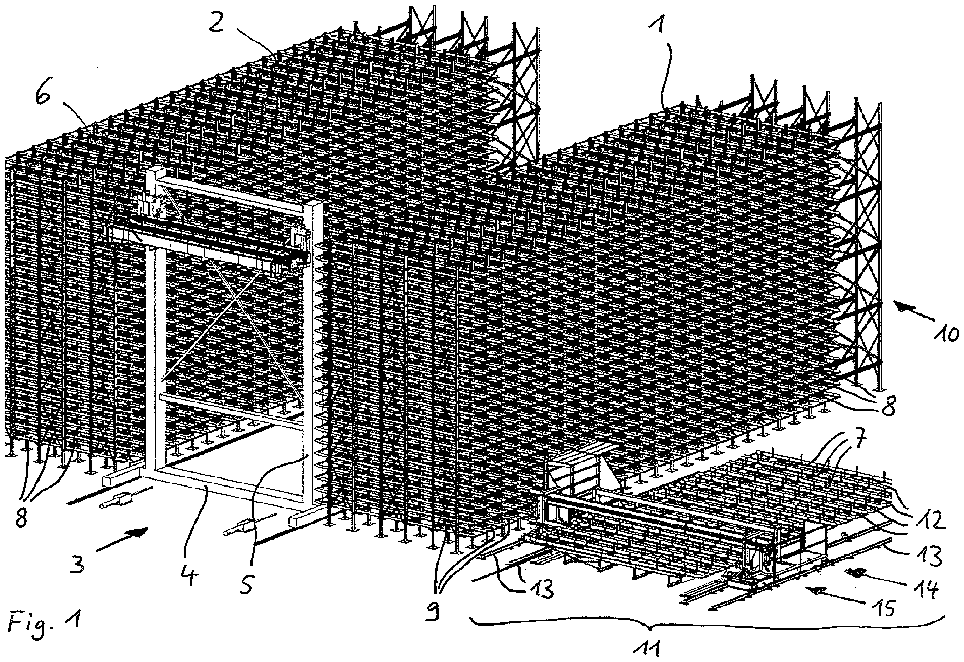

In Figur 1 ist in einer schematischen isometrischen Darstellung ein erstes Ausführungsbeispiel , nicht gemäß der Erfindung, zu sehen. Dieses Wabenlager ist insbesondere für Langgut vorgesehen und umfasst ein erstes Regal 1 und ein zweites Regal 2, zwischen denen in einer Regalgasse 3 ein Regalbediengerät 4 fahren kann. Dieses Regalbediengerät 4 besteht im Wesentlichen aus einem Fahrgestell 5, das sich entlang der Regalgasse 3 horizontal bewegen kann, sowie einem Hubschlitten 6, der am Fahrgestell 5 auf und ab beweglich ist und mit einer Lastaufnahmeeinheit versehen ist, die in der Lage ist, Kassetten 7, die vorliegend als Langgutkassetten ausgeführt sind, längs in einzelne Lagerplätze 8 im Wabenlager hineinzuschieben oder aus einzelnen Lagerplätzen 8 auf den Hubschlitten 6 hinauszuziehen.

Die Regale 1, 2 des Wabenlagers bestehen im Wesentlichen aus einer Anzahl von Stützen und einer Anzahl von Längs- und Querstreben, die eine Vielzahl von wabenartig angeordneten Lagerplätzen 8, hier in zeilen- und spaltenform angeordnet, bilden. Die Bedienseite der Regale 1, 2 ist zur Regalgasse 3 hin ausgerichtet, so dass das Regalbediengerät 4 jeden einzelnen Lagerplatz 8 anfahren und bedienen kann.

Die Kassetten 7 weisen zwei Stirnseiten und zwei Längsseiten auf, wobei die Stirnseiten signifikant kleinere Abmessungen als die Längsseiten besitzen. Die Regale 1, 2 des Wabenlagers verfügen, von der Regalgasse 3 aus gesehen, über eine große Tiefe, um die Kassetten 7 solcherart aufnehmen zu können, dass eine ihrer Stirnseiten zur Regalgasse 3 hin und somit zur Bedienseite hin orientiert ist. Die Kassetten 7 werden also längs in die Lagerplätze 8 eingeschoben. Wegen der vergleichsweise kleinen Abmessungen der Stirnseiten ergeben sich so besonders viele Lagerplätze 8, die vom Regalbediengerät 4 in der Regalgasse 3 angefahren werden können.

Um nun einen Kundenauftrag oder einen Produktionsauftrag kommissionieren zu können, entnimmt das Regalbediengerät 4 sukzessive die Kassetten 7 mit den benötigten, verschiedenen Werkstücken aus den Regalen 1, 2 und schiebt sie in freigehaltene, als Bereitstellungslagerplätze 9 qualifizierte, bodennahe Lagerplätze 8 ein. Diese Bereitstellungslagerplätze 9 sind zu einer Frontseite 10 des Regals hin offen, so dass sie auch an der Frontseite 10, die der Bedienseite des Regals 1 gegenüberliegt, aus dem Regal 1 entnommen werden können. Vor der Frontseite 10 des Regals 1 befindet sich eine Kommissioniereinrichtung 11, bestehend aus einer Mehrzahl von Kommissionierplätzen 12 für Kassetten 7, quer verlaufenden Schienen 13 und einem auf den Schienen 13 laufenden Kommissionierwagen 14, der nach dem hier dargestellten, ersten Ausführungsbeispiel mit einer Entnahmevorrichtung 15 kombiniert ist.

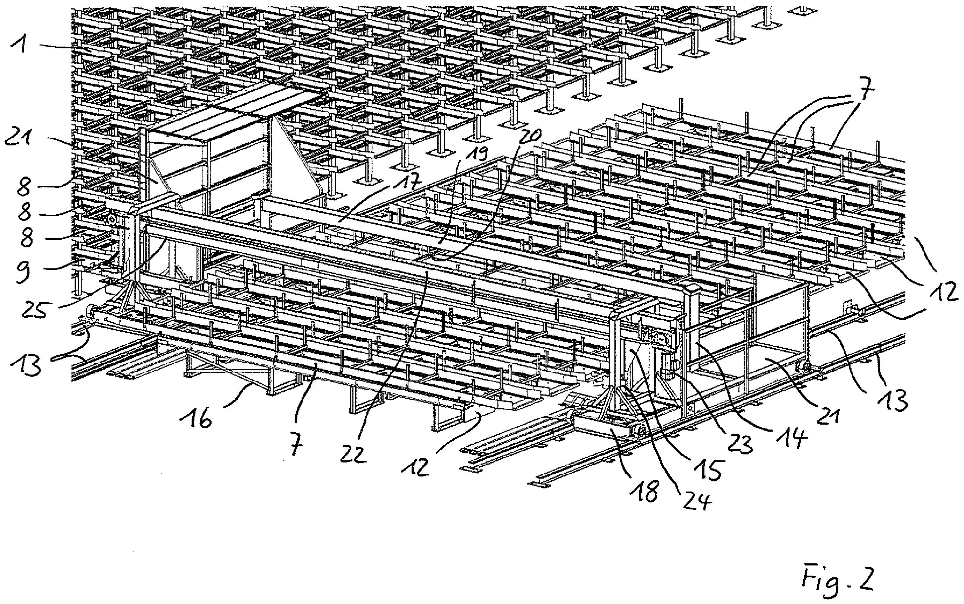

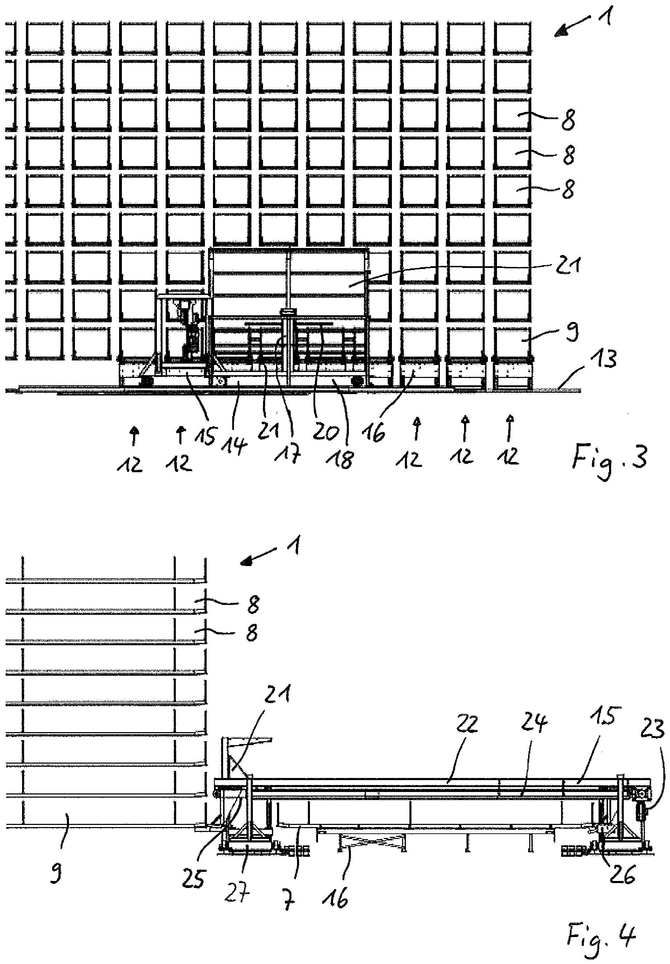

In Figur 2, einer Detailvergrößerung aus Figur 1, sind die Kommissioniereinrichtung 11 und ihre Bestandteile besser erkennbar. Eine Mehrzahl von Kommissionierplätzen 12 ist von jeweils einer Kassette 7 belegt, die auf jeweils einer Tragstruktur 16 sitzen, um eine Niveaugleichheit mit den Bereitstellungslagerplätzen 9 des Regals 1 herzustellen. Dies ist in den Figuren 3 und 4 verdeutlicht, welche eine Frontansicht und eine Seitenansicht der in Figur 2 dargestellten Kommissioniereinrichtung 11 zeigen.

Wie aus den Figuren 2, 3 und 4 ersichtlich, besteht der Kommissionierwagen 14 aus einer Zwischenablagestruktur 17, die stirnseitig jeweils mit einem schienengeführten Wagenelement 18 verbunden ist und mit diesem zusammen einen lichten Raum bildet, der den Abmessungen der auf den Kommissionierplätzen 12 abgestellten Kassetten 7 angepasst ist. Diese werden von der Zwischenablagestruktur 17 längs überspannt, und mit Hilfe der Wagenelemente 18, die auf den Schienen 13 laufen, kann der Kommissionierwagen 14 auch dann alle Kommissionierplätze 12 anfahren, wenn diese mit Kassetten 7 belegt sind.

Die Zwischenablagestruktur 17 des Kommissionierwagens 14 besteht ihrerseits im Wesentlichen aus einer Traverse 19, an der in regemäßigen Abständen Querstreben 20 angebracht sind, um dort Langgut zwischenlagern zu können.

Auf beiden Wagenelementen 18 sind Bedienerplattformen 21 angebracht, auf denen Bedienpersonen Platz finden, mit dem Kommissionierwagen 14 mitfahren können und von denen aus die Bedienpersonen in der Lage sind, Langgut aus einer Kassette 7 jeweils stirnseitig zu erfassen, anzuheben und auf den Querstreben 20 der Zwischenablagestruktur 17 abzulegen, und umgekehrt.

Es ist also beispielsweise möglich, Werkstücke aus einer Kassette 7, die beispielsweise auf dem ganz links dargestellten Kommissionierplatz 12 sitzt, mit dem Kommissionierwagen 14 aufzunehmen, auf dessen Zwischenablagestruktur 17 zwischenzulagern und in mehrere Kommissionen, die sich in den anderen Kassetten 7 auf den Kommissionierplätzen 12 befinden, einzusortieren. Da im vorliegenden Beispiel alle Lagerplätze 8 des Regals 1, die sich in Flucht mit den Kommissionierplätzen 12 befinden, als Bereitstellungslagerplätze 9 qualifiziert sind, können außerdem mehr als eine Kassette 7 mit zu verteilenden Werkstücken aus dem Regal 1 gezogen werden, um mit Hilfe des Kommissionierwagens 14 Werkstücke zu entnehmen und auf weitere Kommissionierplätze 12 zu verteilen. Es ist auch möglich, einen fertig kommissionierten Auftrag, der sich in einer Kassette 7 auf einem Kommissionierplatz 12 befindet, in einen Bereitstellungslagerplatz 9 zurückzuschieben, von wo er mittels des Regalbediengeräts 4 in einen beliebigen Lagerplatz 8 im Wabenlager verbracht werden kann, um zu einem späteren Zeitpunkt wieder aus dem Wabenlager geholt zu werden.

Der in den Figuren 2, 3 und 4 dargestellte Kommissionierwagen 14 verfügt neben der Zwischenablagestruktur 17, den beiden Wagenelementen 18 und den Bedienerplattformen 21 außerdem über eine Entnahmevorrichtung 15, die ebenfalls auf den Wagenelementen 18 sitzt und zusammen mit dem Kommissionierwagen 14 entlang der Schienen 13 quer verfahrbar ist. Die Entnahmevorrichtung 15 besteht hier im Wesentlichen aus einer Längstraverse 22 und einer mittels eines Elektromotors 23 motorisch betriebenen Manipuliervorrichtung 24 zum Ziehen und Schieben einer Kassette 7 entlang der Längstraverse 22. Diese Manipuliervorrichtung 24 umfasst eine Führung mit einer umlaufenden Rollenkette 25 sowie einen daran angebrachten Manipulator 26, mit dem die Kassetten 7 entlang der Längstraverse 22 gezogen und geschoben werden können, um sie von einem Kommissionierplatz 12 in einen Bereitstellungslagerplatz 9 umzulagern und umgekehrt. Das Wagenelement 18 des Kommissionierwagens 14, das zur Frontseite 10 des Regals hin orientiert ist, ist hierzu mit einer Öffnung versehen, die vorliegend schlicht der lichte Raum zwischen den Stützen ist, die die Längstraverse 22 tragen, um ein Durchziehen oder Durchschieben von Kassetten 7 zu ermöglichen.

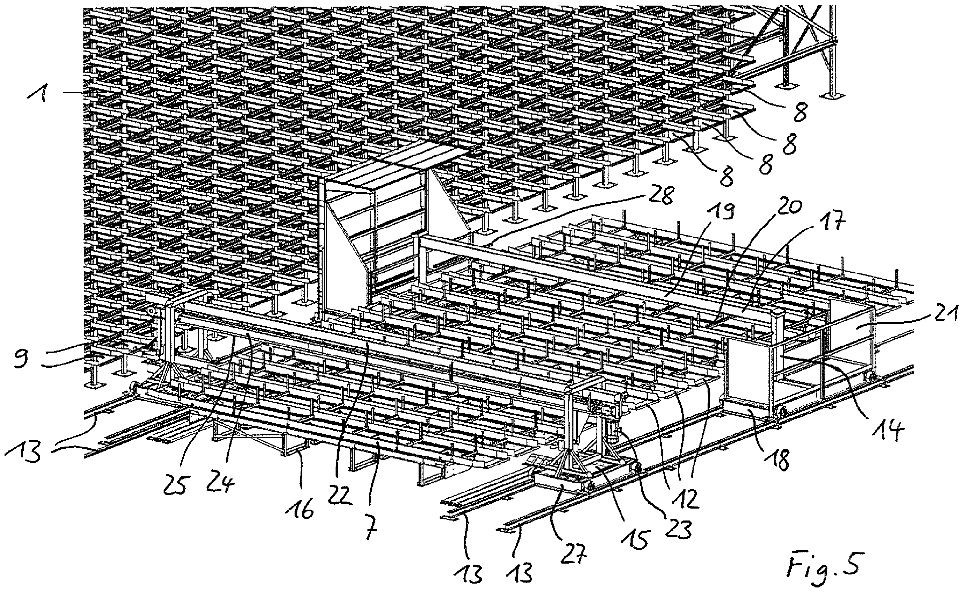

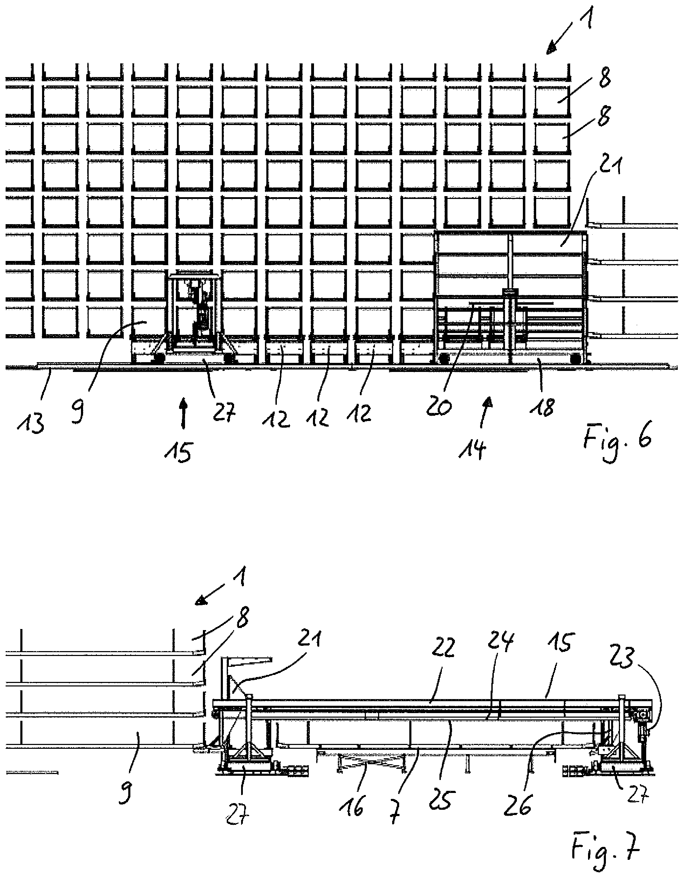

In den Figuren 5, 6 und 7 ist in einer isometrischen Ansicht, einer Frontansicht und einer Seitenansicht eine Kommissioniereinrichtung 11 dargestellt, die ein zweites Ausführungsbeispiel, gemäß der Erfindung, verkörpert. Der Unterschied zu dem in den Figuren 1 bis 4 dargestellten Ausführungsbeispiel besteht darin, dass der Kommissionierwagen 14 und die Entnahmevorrichtung 15 separate Vorrichtungen sind und unabhängig voneinander entlang den Schienen 13 bewegt werden können. Hierzu verfügt die Entnahmevorrichtung 15 über eigene schienengebundene Wagen 27, die die Längstraverse 22 sowie die Manipuliervorrichtung 24 tragen und mit diesen zusammen einen lichten Raum bilden, mittels dessen die Entnahmevorrichtung 15, die Kommissionierplätze 12 und die darauf abgesetzten Kassetten 7 längs überspannend, in die Lage versetzt ist, die Kommissionierplätze 12 mit Kassetten 7 quer zu überfahren. Die Entnahmevorrichtung 15 ist von einem Bedienpanel 28, das auf einer der beiden Bedienerplattformen 21 des Kommissionierwagens 14 angeordnet ist, ansteuerbar.

Der Aufbau der Entnahmevorrichtung 15 an sich, sowie der Aufbau des Kommissionierwagens 14 an sich sind gegenüber dem ersten Ausführungsbeispiel aus den Figuren 1 bis 4 ansonsten unverändert geblieben, so dass auf die obige Beschreibung verwiesen werden kann.

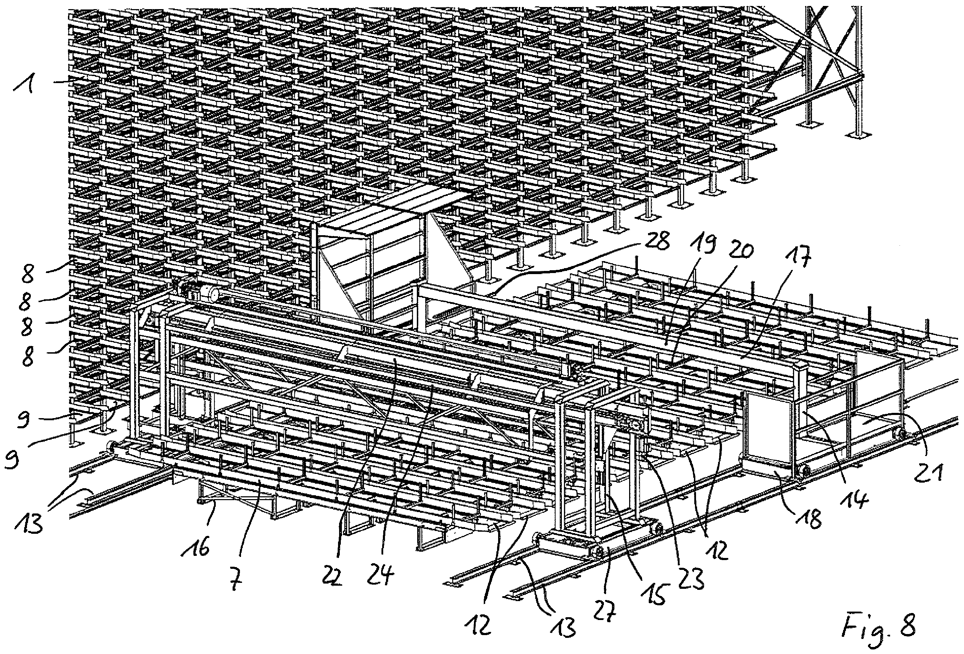

Die Figuren 8, 9 und 10 zeigen wiederum in einer isometrischen Darstellung, einer Frontansicht und einer Seitenansicht ein drittes Ausführungsbeispiel für ein erfindungsgemäß ausgestaltetes Wabenlager. Dieses unterscheidet sich von den beiden vorangehenden Ausführungsbeispielen wiederum durch eine abweichende Ausgestaltung der Kommissioniereinrichtung 11.

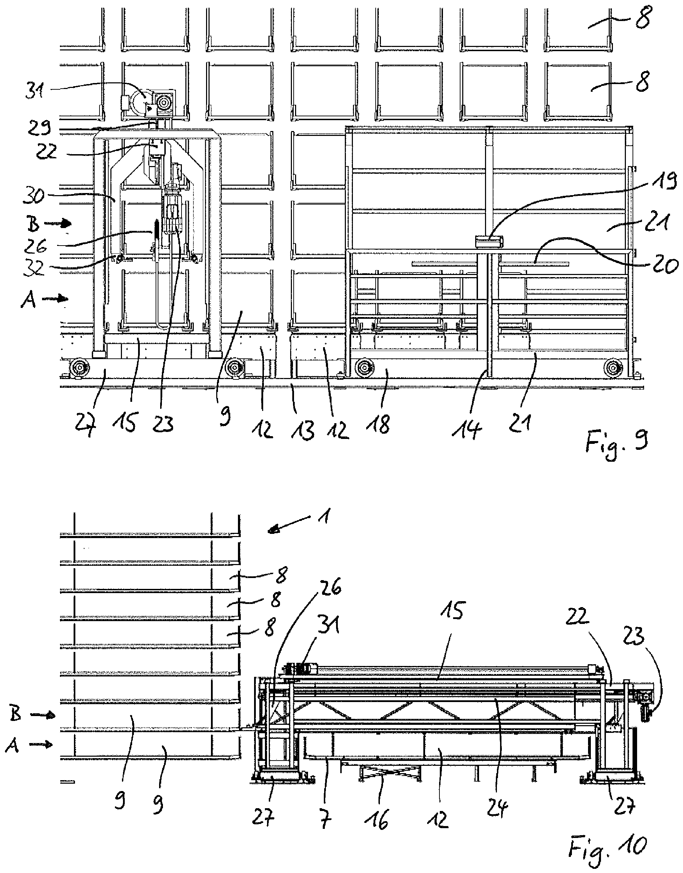

Wie beim zweiten Ausführungsbeispiel, sind auch bei diesem dritten Ausführungsbeispiel der Kommissionierwagen 14 und die Entnahmevorrichtung 15 separate Vorrichtungen, die unabhängig voneinander entlang der Schienen 13 bewegbar sind. Während der Kommissionierwagen 14 identisch mit dem Kommissionierwagen aus dem zweiten Ausführungsbeispiel ist, ist die Entnahmevorrichtung 15 im vorliegenden dritten Ausführungsbeispiel modifiziert. Denn diese Entnahmevorrichtung 15 weist zwei Arbeitsebenen A und B auf (Figur 9), so dass mit dieser Entnahmevorrichtung 15 Kassetten aus den beiden untersten Ebenen des Regals 1 entnommen werden können. Somit hat sich die Anzahl der möglichen Bereitstellungslagerplätze 9 im Regal 1 verdoppelt.

Die beiden Arbeitsebenen A, B der Entnahmevorrichtung 15 werden von ein und derselben Manipuliervorrichtung 24 bedient; denn die Entnahmevorrichtung 15 verfügt über ein Hubwerk 29, das aus Tragarmen 30 und einem Hubantrieb 31 besteht, welche Tragarme 30 mittels abklappbarer Hebel 32 gleichzeitig eine Halterung für Kassetten 7 bilden, die in der oberen Arbeitsebene B gehalten werden. Die Tragarme 30 sind an der Längstraverse 22 angebracht, und die Längstraverse 22 wird mitsamt der Manipuliervorrichtung ebenfalls vom Hubwerk 29 und seinem Hubantrieb 31 zwischen den Arbeitsebenen A und B bewegt, so dass die Entnahmevorrichtung 15 in beiden Ebenen A, B mit den jeweiligen Bereitstellungslagerplätzen 9 zusammenarbeiten kann.

Die zweite Arbeitsebene B bietet außerdem den Vorteil, dass die Entnahmevorrichtung 15 eine aus einem Bereitstellungslagerplatz 9 entnommene Kassette in die obere Arbeitsebene B anheben oder dort belassen kann, um mitsamt dieser Kassette 7 alle Kommissionierplätze 12 zu überfahren, auch wenn auf diesen weitere Kassetten 7 abgestellt sind. Eine Entnahmevorrichtung 15, die nur in einer Ebene arbeitet, kann hingegen Kassetten 7 immer nur zwischen in Flucht liegenden Bereitstellungslagerplätzen 9 und Kommissionierplätzen 12 hin und her bewegen. Dieses dritte Ausführungsbeispiel erhöht die Flexibilität beim Kommissionieren also weiter.

Neben diesen zwei Ausführungsbeispielen gemäß der Erfindung liegen naturgemäß noch weitere Abwandlungen im Rahmen der vorliegenden Erfindung. Beispielsweise kann der Kommissionierwagen 14 mit einer integrierten Entnahmevorrichtung 15 ausgestattet sein, die zwei Arbeitsebenen A, B aufweist. Wenn Werkstücke kommissioniert werden sollen, die zu schwer sind, um von zwei Bedienpersonen händisch in der Zwischenablagestruktur 17 des Kommissionierwagens 14 zwischengepuffert zu werden, kann der Kommissionierwagen 14 mit Hilfsaggregaten, beispielsweise einem Brückenkran ausgestattet sein. Anstatt die Werkstücke durch Bedienpersonen zu komissionieren, kann ein Kommissionierwagen auch mit Manipulatoren, beispielsweise einem Industrieroboter ausgestattet sein. Die Entnahmevorrichtung 15 kann beispielsweise mit zwei unabhängig arbeitenden Manipuliervorrichtungen versehen sein, wenn sie zwei Arbeitsebenen A, B umfasst, um die Flexibilität noch weiter zu erhöhen, oder sie kann mehr als zwei Arbeitsebenen aufweisen und dergleichen mehr.

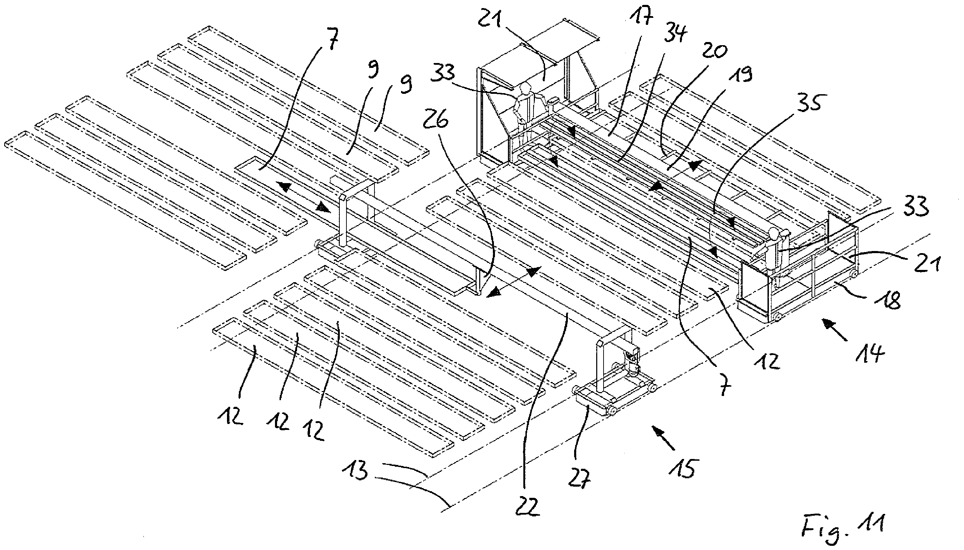

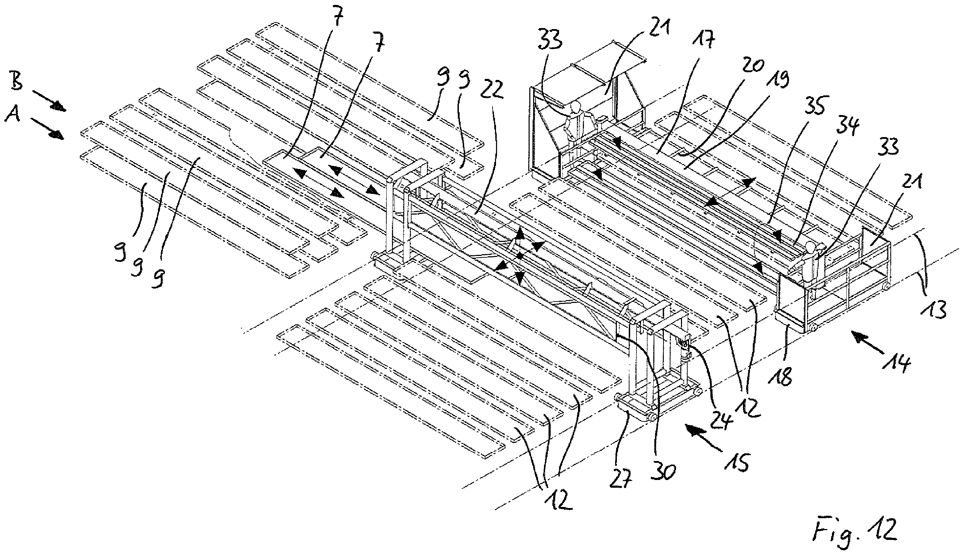

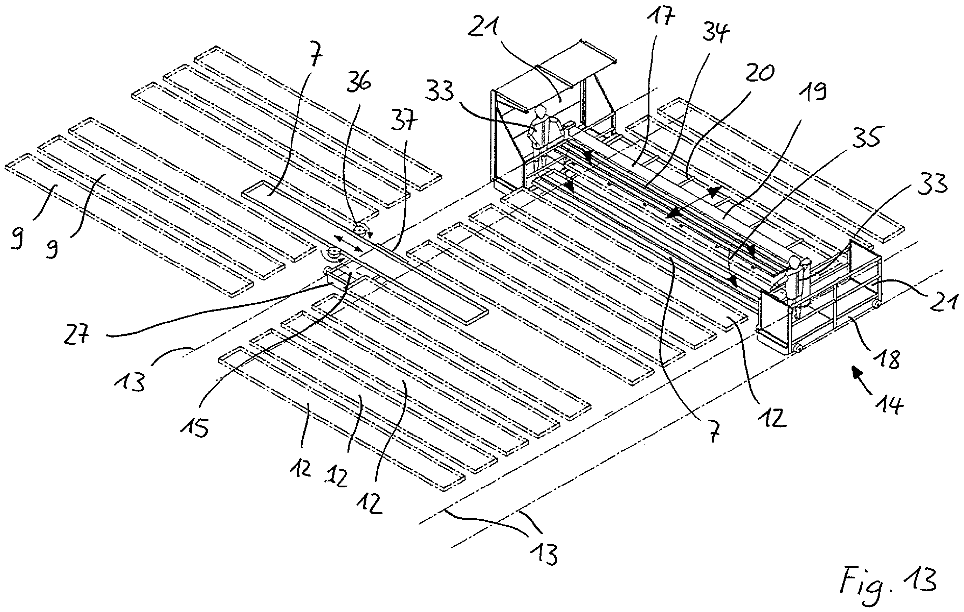

Die Figuren 11, 12 und 13 zeigen schließlich anhand vereinfachter Darstellungen von erfindungsgemäß ausgestalteten Kommissioniereinrichtungen 11 die Arbeitsabläufe beim Kommissionieren im erfindungsgemäßen Wabenlager nach dem zweiten Ausführungsbeispiel (Figur 11) bzw. nach dem dritten Ausführungsbeispiel (Figur 12) bzw. nach einem vierten Ausführungsbeispiel, nicht gemäß der Erfindung (Figur 13).

In diesen Figuren sind zwei Bedienpersonen 33 dargestellt, die sich auf dem Kommissionierwagen 14 bzw. auf dessen beiden Bedienerplattformen 21 befinden. Auf der Zwischenablagestruktur 17 des Kommissionierwagens 14 sind drei Profile 34 zwischengelagert, die auf den Querstreben 20 der Zwischenablagestruktur 17 liegen. Wie durch Doppelpfeile 35 angedeutet, können die Profile 34 von den Bedienpersonen 33 händisch von der Zwischenablagestuktur 17 weggenommen und in eine Kassette 7 gelegt werden, die auf dem aktuellen Kommissionierplatz 12 sitzt. Beispielsweise wird hier ein Profil in die Kassette 7 abgelegt, und dann der Kommissionierwagen 14 an einen benachbarten Kommissionierplatz 12 gefahren, wo das nächste Profil 34 in die dortige Kassette 7 abgelegt wird. Umgekehrt können Profile 34 aus einer Kassette 7 entnommen und auf der Zwischenablagestruktur 17 des Kommissionierwagens 14 abgelegt werden, um sie in die verschiedenen Kommissionen zu verteilen.

Gleichzeitig und unabhängig vom Kommissionierwagen 14 ist die Entnahmevorrichtung 15 dabei, eine Kassette 7 aus einem Bereitstellungslagerplatz 9 des (hier nicht dargestellten) Regals zu holen und auf einen Kommissionierplatz 12 zu ziehen. Dies erfolgt bei den Entnahmevorrichtungen der Figuren 11 und 12 mittels des Manipulators 26, der entlang der Längstraverse 22 motorisch bewegbar ist. Der Manipulator 26 ist mit einer Klinke versehen, die die Kassette 7 ziehen und schieben kann und von dieser wieder lösbar ist.

Wie durch Doppelpfeile angedeutet, können sowohl die Entnahmevorrichtung 15 als auch der Kommissionierwagen 14, die die Kassetten 7 auf den Kommissionierplätzen 12 jeweils überspannen, quer zu allen Kommissionierplätzen 12 verfahren werden.

Die in Figur 12 dargestellte Entnahmevorrichtung 15 verfügt hierbei über zwei Arbeitsebenen A, B, zwischen denen mittels eines Hubwerks gewechselt werden kann, indem die Längstraverse 22 mitsamt der Manipuliervorrichtung 24 sowie Tragarmen 30 auf und ab bewegt wird.

Das in Figur 13 dargestellte vierte Ausführungsbeispiel ist nicht gemäß der Erfindung, es unterscheidet sich vom zweiten Ausführungsbeispiel lediglich durch eine andere Ausbildung der Entnahmevorrichtung 15. Diese besteht im Wesentlichen aus nur einem schienengebundenen Wagen 27, auf dem die motorisch betriebene Manipuliervorrichtung zum Ziehen und Schieben einer Kassette 7 als Reibradantrieb 36 ausgebildet ist. Dieser besteht im Wesentlichen aus zwei motorisch betriebenen Reibrädern, die eine Kassette 7 zwischen sich bewegen können. Mindestens eine Längsführung 37 sorgt für eine korrekt ausgerichtete Bewegung der Kassetten 7. Eine Längstraverse 22 kann hier entfallen, was die Entnahmevorrichtung 15 konstruktiv stark vereinfacht.

## Patentansprüche

1. Kommissioniereinrichtung mit Kassetten (7) für ein Wabenlager mit mindestens einem Regal (1), das eine Mehrzahl von nebeneinander und übereinander angeordneten, von einer Bedienseite zugänglichen Lagerplätzen (8) zur Aufnahme von Kassetten (7) aufweist, wobei die Lagerplätze (8) so ausgestaltet sind, dass die Kassetten (7) an der Bedienseite in Längsrichtung horizontal aus den Lagerplätzen (8) entnehmbar und in diese einbringbar sind, wobei an der Bedienseite des Regals ein Regalbediengerät (4) vorgesehen ist,
wobei die Kommissioniereinrichtung (11) zur Anordung an einer der Bedienseite gegenüber liegenden Frontseite (10) des Regals (1) und zur Zuordnung zu einer Anzahl von als Bereitstellungslagerplätzen (9) verwendeten Lagerplätzen (8) vorgesehen ist, die so ausgestaltet sind, dass darin befindliche Kassetten (7) auch an der Frontseite (10) des Regals (1) entnommen werden können, und wobei die Kommissioniereinrichtung (11) im Wesentlichen gebildet ist aus einer Anzahl von Kommissionierplätzen (12) zum Abstellen von Kassetten (7), wobei an den Kommissionierplätzen (12) Kassetten (7) abgestellt sind, einem entlang der Frontseite (10) des Regals (1) in Querrichtung der Kassetten (7) verfahrbaren Kommissionierwagen (14), der so ausgebildet ist, dass er im Wesentlichen alle Komissionierplätze (12) anfahren kann, sowie einer entlang der Frontseite (10) des Regals (1) in Querrichtung der Kassetten (7) verfahrbaren Entnahmevorrichtung (15) zum Herausziehen und Einschieben von Kassetten (7) aus und in Bereitstellungslagerplätze (9) des Wabenlagers, um die Kassetten (7) auf den Kommissionierplätzen (12) abzustellen oder von diesen zurückzulagern,
wobei die Entnahmevorrichtung (15) eine Längstraverse (22) umfasst, die der Länge einer Kassette (7) angepasst ist, um diese längs zu überspannen, und mit einer motorisch betriebenen Manipuliervorrichtung (24) zum Ziehen und Schieben einer Kassette (7) entlang der Längstraverse (22) versehen ist,
**dadurch gekennzeichnet,**
**dass** die Entnahmevorrichtung (15) vom Kommissionierwagen (14) unabhängig ist,
**dass** die Längstraverse (22) der Entnahmevorrichtung (15) an ihren stirnseitigen Endbereichen mit jeweils einem mechanisch oder elektronisch geführten, insbesondere schienengebundenen Wagen (27) verbunden ist, wobei die Wagen (27) zusammen mit der Längstraverse (22) einen lichten Raum unterhalb der Längstraverse (22) bilden, der, zum ungehinderten Überfahren von auf Kommissionierplätzen (12) abgestellten Kassetten (7), den Abmessungen einer solchen Kassette (7) angepasst ist,
und **dass** der Kommissionierwagen (14) aus mindestens einer Zwischenablagestruktur (17) zur Zwischenlagerung von Langgut, deren Länge der Länge einer Kassette (7) angepasst ist, um diese längs zu überspannen, sowie zwei mechanisch oder elektronisch geführten, insbesondere schienengeführten Wagenelementen (18) besteht, die mit der Zwischenablagestruktur (17) jeweils an ihren stirnseitigen Endbereichen verbunden sind und zusammen mit der Zwischenablagestruktur (17) einen lichten Raum unterhalb der Zwischenablagestruktur (17) bilden, der, zum ungehinderten Überfahren von auf Kommissionierplätzen (12) abgestellten Kassetten (7), den Abmessungen einer Kassette (7) angepasst ist.

2. Kommissioniereinrichtung nach Anspruch 1,
wobei die Entnahmevorrichtung (15) mindestens zwei Arbeitsebenen (A, B) aufweist und mit einer Heb- und Senkeinrichtung zum Bewegen von Kassetten (7) zwischen den Arbeitsebenen (A, B) versehen ist.

3. Kommissioniereinrichtung nach einem der Ansprüche 1 oder 2, wobei die Zwischenablagestruktur (17) des Kommissionierwagens (14) im Wesentlichen aus einer Traverse (19) mit daran angeordneten Querstreben (20) besteht.

4. Kommissioniereinrichtung nach mindestens einem der Ansprüche 1 bis 3, wobei mindestens eines der Wagenelemente (18) des Kommissionierwagens (14) mit einer Bedienerplattform (21) versehen ist

5. Kommissioniereinrichtung nach mindestens einem der Ansprüche 1 bis 4, wobei der Kommissionierwagen (14) mit mindestens einem Manipulator für in den Kassetten (7) gelagerte Werkstücke ausgestattet ist.

## Claims

1. Order picking apparatus having cartridges (7) for a honeycomb storage system having at least one shelf (1) which has a plurality of storage units (8), which are arranged side by side and one above the other and are accessible from an operating side, for receiving cartridges (7), wherein the storage units (8) are designed such that on the operating side the cartridges (7) can be removed from the storage units (8) and can be inserted therein horizontally in the longitudinal direction, wherein a shelf operating device (4) is provided on the operating side of the shelf,
wherein the order picking apparatus (11) is provided for arrangement on a front side (10) of the shelf (1) opposite the operating side and for allocation to a number of storage units (8) which are used as provisioning storage units (9) and which are designed such that cartridges (7) located therein can also be removed at the front side (10) of the shelf (1), and wherein the order picking apparatus (11) is substantially formed by a number of order picking units (12) for depositing cartridges (7), wherein cartridges (7) are deposited at the order picking units (12), an order picking cart (14) which is movable along the front side (10) of the shelf (1) in the transverse direction relative to the cartridges (7) and which is designed such that it can approach substantially all the order picking units (12), and a removal device (15), which is movable along the front side (10) of the shelf (1) in the transverse direction relative to the cartridges (7), for pulling out and inserting cartridges (7) from and into provisioning storage units (9) of the honeycomb storage system in order to deposit the cartridges (7) on the order picking units (12) or to return them therefrom,
wherein the removal device (15) comprises a longitudinal crossbar (22) which is adapted to the length of a cartridge (7) in order to span the cartridge longitudinally and is provided with a motor-driven manipulation device (24) for pulling and pushing a cartridge (7) along the longitudinal crossbar (22),
**characterised in that**
the removal device (15) is independent from the order picking cart (14),
the longitudinal crossbar (22) of the removal device (15) is connected at each of its end regions to a mechanically or electronically guided, in particular rail-bound, cart (27), wherein the carts (27) together with the longitudinal crossbar (22) form a clear space below the longitudinal crossbar (22), which clear space is adapted to the dimensions of such a cart (7) for unhindered passage of cartridges (7) deposited on order picking units (12),
and the order picking cart (14) consists of at least one intermediate storage structure (17), for temporary storage of long goods, the length of which is adapted to the length of a cartridge (7) in order to span the cartridge longitudinally, and two mechanically or electronically guided, in particular rail-guided, cart elements (18) which are each connected to the intermediate storage structure (17) at their end regions and, together with the intermediate storage structure (17), form a clear space below the intermediate storage structure (17), which clear space is adapted to the dimensions of a cartridge (7) for unhindered passage of cartridges (7) deposited on order picking units (12).

2. Order picking apparatus according to claim 1,
wherein the removal device (15) has at least two operating levels (A, B) and is provided with a lifting and lowering apparatus for moving cartridges (7) between the operating levels (A, B).

3. Order picking device according to any of claims 1 or 2, wherein the intermediate storage structure (17) of the order picking cart (14) substantially consists of a crossbar (19) with transverse struts (20) arranged thereon.

4. Order picking device according to at least one of claims 1 to 3,
wherein at least one of the cart elements (18) of the order picking cart (14) is provided with an operator platform (21).

5. Order picking device according to at least one of claims 1 to 4, wherein the order picking cart (14) is equipped with at least one manipulator for workpieces stored in the cartridges (7).

## Revendications

1. Dispositif de préparation de commandes avec des cassettes (7) pour un magasin en nid d'abeilles avec au moins une étagère (1), qui présente une pluralité d'emplacements de stockage (8) agencés les uns à côté des autres et les uns au-dessus des autres, accessibles depuis un côté de service pour l'accueil des cassettes (7), dans lequel les emplacements de stockage (8) sont conçus de sorte que les cassettes (7) peuvent être retirées des emplacements de stockage (8) de manière horizontale dans la direction longitudinale au niveau du côté de service, dans lequel un transstockeur (4) est prévu au niveau du côté de service de l'étagère,
dans lequel le dispositif de préparation de commandes (11) est prévu pour l'agencement sur un côté avant (10), situé à l'opposé du côté de service, de l'étagère (1) et pour l'association à un nombre d'emplacements de stockage (8) utilisés comme emplacements de stockage de mise à disposition (9), lesquels sont conçus de sorte que des cassettes (7) qui s'y trouvent peuvent également être retirées au niveau du côté avant (10) de l'étagère (1), et dans lequel le dispositif de préparation de commandes (11) est formé sensiblement à partir d'un nombre d'emplacements de préparation de commandes (12) pour remiser des cassettes (7), dans lequel des cassettes (7) sont remisées sur les emplacements de préparation de commandes (12), un chariot de préparation de commandes (14) pouvant être déplacé dans la direction transversale des cassettes (7) le long du côté avant (10) de l'étagère (1), qui est réalisé de sorte qu'il peut atteindre sensiblement tous les emplacements de préparation de commandes (12), ainsi qu'un dispositif de retrait (15) pouvant être déplacé le long du côté avant (10) de l'étagère (1) dans la direction transversale des cassettes (7) pour retirer des cassettes (7) hors des emplacements de stockage de mise à disposition (9) et les insérer dans ceux-ci afin de remiser les cassettes (7) sur les emplacements de préparation de commandes (12) ou de les y restocker,
dans lequel le dispositif de retrait (15) comprend une traverse longitudinale (22) qui est adaptée à la longueur d'une cassette (7) afin d'étendre celle-ci de manière longitudinale, et est muni d'un dispositif de manipulation (24) entraîné par un moteur pour tirer et pousser une cassette (7) le long de la traverse longitudinale (22),
**caractérisé en ce que**
le dispositif de retrait (15) est indépendant du chariot de préparation de commandes (14),
la traverse longitudinale (22) du dispositif de retrait (15) est reliée, au niveau de ses régions d'extrémité situées du côté avant, à respectivement un chariot (27) guidé de manière mécanique ou électronique, en particulier monté sur rails, dans lequel les chariots (27) forment avec la traverse longitudinale (22), en dessous de la traverse longitudinale (22), un espace libre qui est adapté aux dimensions d'une telle cassette (7) afin de permettre le passage sans entrave de cassettes (7) remisées sur des emplacements de préparation de commandes (12),
et le chariot de préparation de commandes (14) se compose d'au moins une structure de dépose intermédiaire (17) permettant le stockage intermédiaire de marchandises allongées, dont la longueur est adaptée à la longueur d'une cassette (7) afin d'étendre celle-ci de manière longitudinale, ainsi que de deux éléments de chariot (18) guidés de manière mécanique ou électronique, en particulier montés sur rails, lesquels sont reliés à la structure de dépose intermédiaire (17) respectivement au niveau de ses régions d'extrémité côté avant forment avec la structure de dépose intermédiaire (17), en dessous de la structure de dépose intermédiaire (17), un espace libre qui est adapté aux dimensions d'une cassette (7) afin de permettre le passage sans entrave de cassettes (7) remisées sur des emplacements de préparation de commandes (12).

2. Dispositif de préparation de commandes selon la revendication 1,
dans lequel le dispositif de retrait (15) présente au moins deux plans de travail (A, B) et est muni d'un dispositif de levage et d'abaissement permettant de déplacer des cassettes (7) entre les plans de travail (A, B).

3. Dispositif de préparation de commandes selon l'une quelconque des revendications 1 ou 2, dans lequel la structure de dépose intermédiaire (17) du chariot de préparation de commandes (14) consiste essentiellement en une traverse (19) sur laquelle sont agencées des entretoises transversales (20).

4. Dispositif de préparation de commandes selon au moins l'une quelconque des revendications 1 à 3,
dans lequel au moins un de ces éléments de chariot (18) de préparation de commandes (14) est muni d'une plate-forme d'opérateur (21).

5. Dispositif de préparation de commandes selon au moins l'une quelconque des revendications 1 à 4, dans lequel le chariot de préparation de commandes (14) est équipé d'au moins un manipulateur pour des pièces d'oeuvre stockées dans les cassettes (7).
